# EUROPEAN PATENT APPLICATION

(11) **EP 2 612 697 A1**
(43) Date of publication of application: **10.07.2013**
(21) Application number: 11836080.9
(22) Date of filing: 18.10.2011
(51) Int. Cl.: B01D 36/02, B01D 24/46, B01D 29/00, B01D 29/62, B01D 33/15, B23Q 11/00

(54) **FILTRATION DEVICE**

(30) Priority: 29.10.2010 JP 2010244072
(71) Applicant: Bunri Incorporation, Miyakonojo-shi Miyazaki 885-1202 (JP)
(72) Inventor: TASHIRO, Minoru, (JP)
(74) Representative: Willquist, Sofia Ellinor
(86) International application number: PCT/JP2011/073944
(87) International publication number: WO 2012/056944

(57) **Abstract**

A filtering apparatus (10) comprises a filter tank (11), a conveyer (13) having a scraper (21), a primary filter (40), and a cylindrical rotating secondary filter (60). The inside of the filter tank (11) is divided into a first filter tank portion (51) and a second filter tank portion (52) by the primary filter (40). Sludge (S) deposited at the bottom of the first filter tank portion (51) is conveyed toward a sludge discharge portion (16) by a first portion (21a) of the scraper (21). A liquid (Q1) in the first filter tank portion (51) is filtered by the primary filter (40) and flows into the second filter tank portion (52). A liquid (Q2) in the second filter tank portion (52) is filtered by the secondary filter (60) and supplied to a clean tank (12). The sludge (S) adhering to the secondary filter (60) is dropped onto the primary filter (40) and discharged toward the first filter tank portion (51) by a second portion (21b) of the scraper (21).

## Description

### Technical Field

The present invention relates to a filtering apparatus that purifies a liquid having, e.g., shavings or particles mixed therein.

### Background Art

In machine tools and the like that perform mechanical processing such as cutting or grinding, a coolant (a cutting fluid) is used to cool a workpiece or a tool. However, shavings (chips), particles, and the like enter the coolant used for the mechanical processing and become mixed therewith. In the field that requires weight saving or corrosion resistance in particular, a material such as aluminum or magnesium is used, and hence the shavings tend to diversify. To purify and reuse such a coolant, various filtering apparatuses have been conventionally suggested.

For example, each of the filtering apparatuses disclosed in the following Patent Literatures 1 and 2 comprises a filter tank, a scraper conveyer for carrying out sludge, a mesh drum that functions as a filter, and other parts. Further, to avoid clogging of the mesh drum, a cleaning liquid jet nozzle is arranged in the mesh drum. A cleaning liquid is jetted from the inner side of the mesh drum toward the mesh drum. That is, a backwashing mesh drum is used.

### Citation List

### Patent Literatures

Patent Literature 1: Japanese Patent No. 2904334
Patent Literature 2: Japanese Patent No. 3389126

### Disclosure of Invention

### Technical Problem

The backwashing mesh drum is effective for avoiding clogging. However, since a cleaning liquid jet mechanism configured to jet the cleaning liquid is required, an equipment become big, and a cost also increases. Furthermore, with rotation of the mesh drum, a pressure of the cleaning liquid jetted from the cleaning liquid jet nozzle is repeatedly applied to the mesh drum. Each time, the mesh drum is deformed. Therefore, the mesh drum undergoes fatigue breaking in a short period of time, and it must be replaced with a new mesh drum. Therefore, there is a problem that the mesh drum has a short life duration. Moreover, the broken mesh drum must be processed as industrial waste, and there is also a problem that a cost for the processing is high.

Additionally, the conventional filtering apparatus using a filter cannot smoothly discharge the floating sludge generated due the diversity of shavings, tangled lengthy shavings, and the like. Therefore, there is a limit in filtering accuracy that can be realized by one filtering apparatus. To acquire a high filtering accuracy, a secondary processing apparatus is additionally required besides the filtering apparatus, which raises the problem of increasing the overall size of the filtering equipment.

Therefore, it is an object of the present invention to provide a filtering apparatus that has a high filtering accuracy and in which clogging hardly occurs.

### Solution to Problem

A filtering apparatus according to the present invention comprises a filter tank, a sludge discharge portion, a conveyer, a primary filter, a first filter tank portion, a second filter tank portion, a cylindrical secondary filter, and a mechanism that rotates the secondary filter. The filter tank accommodates a liquid to be filtered (e.g., a coolant). The sludge discharge portion is provided at a position higher than a liquid level of the liquid in the filter tank. The conveyer has a scraper that moves from a bottom portion of the filter tank to get across the sludge discharge portion. The primary filter is arranged in the filter tank along a moving direction of the conveyer. This primary filter has a primary circulation hole through which the liquid passes. The first filter tank portion is formed between the bottom portion of the filter tank and the primary filter. The second filter tank portion is formed on an upper side of the primary filter. The secondary filter is rotatably arranged in the second filter tank portion. This secondary filter has a secondary circulation hole through which the liquid passes.

In an embodiment according to the present invention, a flow path cross-sectional area of the secondary circulation hole (e.g., a hole diameter of the secondary circulation hole) is smaller than a flow path cross-sectional area of the primary circulation hole (e.g., a hole diameter of the primary circulation hole). Further, in a preferred embodiment according to the present invention, the scraper of the conveyer comprises a first portion that faces the bottom portion of the filter tank and moves along the bottom portion on a lower portion of the conveyer and a second portion that faces an upper surface of the primary filter and moves along the upper surface on an upper portion of the conveyer.

The filter tank preferably comprises a guide member that guides a chain in the lower portion of the conveyer. This guide member guides the chain so that the second portion of the scraper can move along a lower surface of the primary filter. An example of a mechanism that rotates the secondary filter has a sprocket that meshes with the chain of the conveyer from above. When the sprocket is driven to rotate with the movement of the conveyer, the secondary filter rotates.

### Advantageous Effects of Invention

The filtering apparatus according to the present invention can perform filtration with a high accuracy by using both the primary filter and the secondary filter. Further, since the primary filter can be cleaned by the sludge discharging conveyer, clogging hardly occurs. According to the present invention, the equipment for secondary processing (a secondary clean tank, a filter, a supply pump, and others) is no longer necessary. Therefore, a compact filtering apparatus with high filtering performance can be provided. Furthermore, the secondary filter can be arranged above the conveyer. Therefore, an operation such as maintenance of the secondary filter can be carried out without removing the chain of the conveyer.

Moreover, the filtering apparatus according to the present invention has a simple configuration since it does not require such a cleaning liquid jet mechanism as that provided in a conventional filtering apparatus comprising a backwashing mesh drum. Additionally, as compared with the conventional backwashing mesh drum, the secondary filter has high durability and a long life duration, thus generation of industrial waste can be suppressed.

### Brief Description of Drawings

FIG. 1 is a cross-sectional view showing a filtering apparatus according to an embodiment of the present invention;
FIG. 2 is a cross-sectional view of the filtering apparatus taken along a line F2-F2 in FIG. 1;
FIG. 3 is a perspective view of part of the filtering apparatus depicted in FIG. 1;
FIG. 4 is a plan view of part of a primary filter in the filtering apparatus shown in FIG. 1;
FIG. 5 is a cross-sectional view of part of the primary filter taken along a line F5-F5 in FIG. 4;
FIG. 6 is a plan view of part of a secondary filter in the filtering apparatus shown in FIG. 1; and
FIG. 7 is a cross-sectional view of part of the secondary filter taken along a line F7-F7 in FIG. 6.

### Description of Embodiment

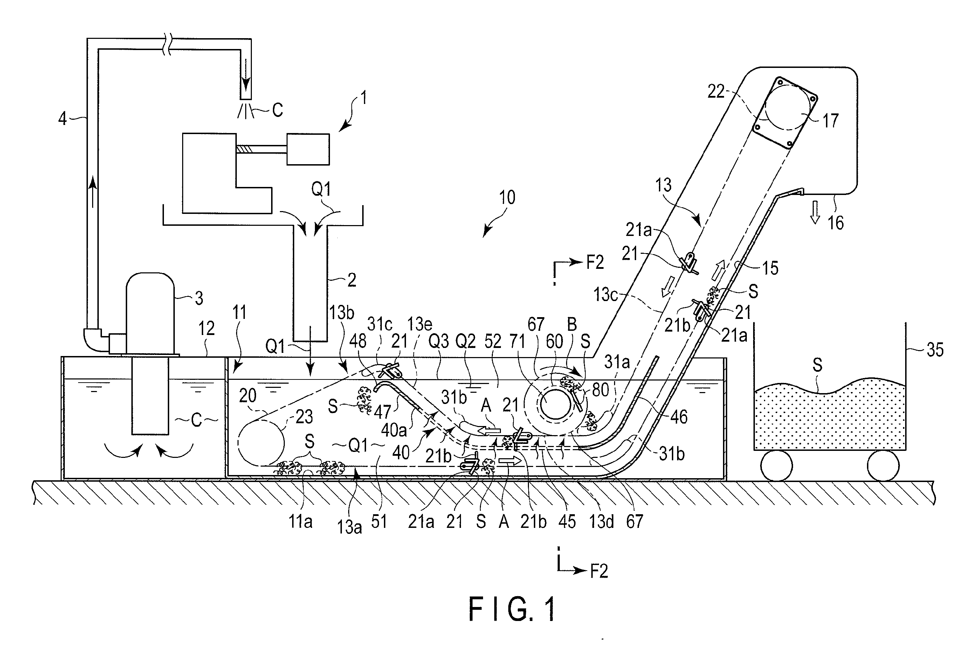

A filtering apparatus according to an embodiment of the present invention will now be described hereinafter with reference to FIG. 1 to FIG. 7.

FIG. 1 shows an outline of an apparatus configured to remove foreign particles from a coolant (a cutting fluid) used in such a machine tool 1 as a machining center. The coolant discharged from the machine tool 1 is an example of a liquid Q1 that should be filtered. In the liquid Q1 is mixed, e.g., an aluminum alloy generated during cutting or the like, shavings of a magnesium alloy or shavings of an iron-based metal, non-metallic fine particles of carbon, and others according to the material being processed.

The liquid Q1 containing shavings or fine particles is supplied to a filtering apparatus 10 from the machine tool 1 through a flow path 2. This liquid Q1 is subjected to primary filtration to produce a liquid Q2 by the filtering apparatus 10. Further, this liquid Q2 is subjected to secondary filtration to produce a clean liquid C. The purified clean liquid C is pumped up by a pump 3 and then again supplied to the machine tool 1 through a supply flow path 4.

Particulars of the filtering apparatus 10 will now be described hereinafter.

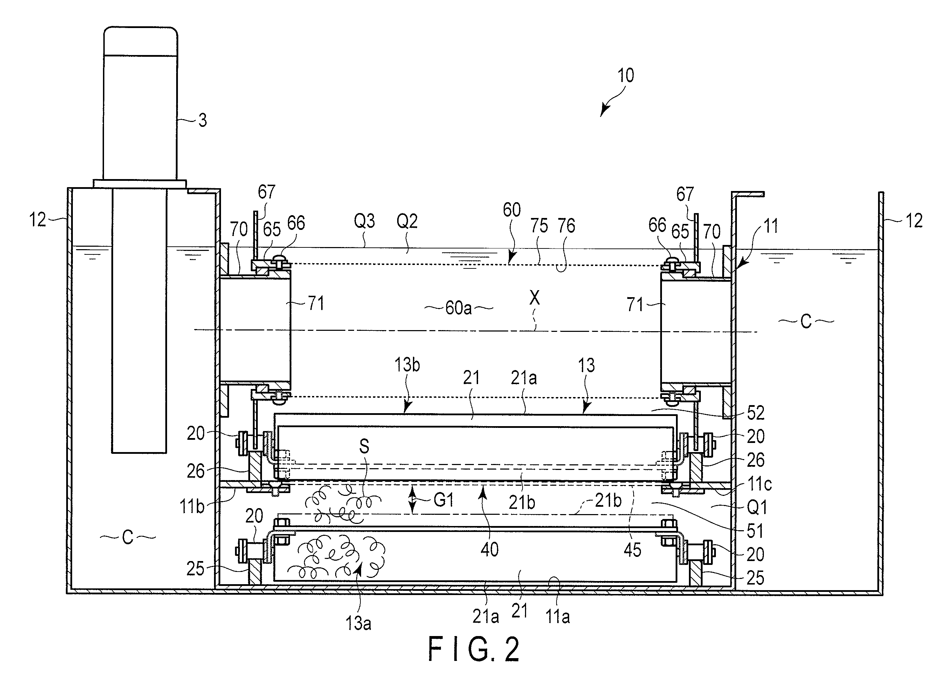

As shown in FIG. 1 and FIG. 2, the filtering apparatus 10 has a filter tank 11 that accommodates the liquid Q1 that should be filtered, a clean tank 12 that accommodates the filtered clean liquid C, and a conveyer (a scraper conveyer) 13 configured to convey sludge. The liquid Q1 to be filtered is supplied to the filter tank 11 from the flow path 2. The clean tank 12 is formed near the filter tank 11.

A sludge scraping portion 15 is formed at an end of the filter tank 11. The sludge scraping portion 15 obliquely extends through a liquid level Q3 in the filter tank 11 and leads to the outside of the filter tank 11. A sludge discharge portion 16 is formed at an upper end of the sludge scraping portion 15. The sludge discharge portion 16 is provided at a position higher than the liquid level Q3 in the filter tank 11. A drive mechanism 17 using a motor as a drive source is provided near the sludge discharge portion 16.

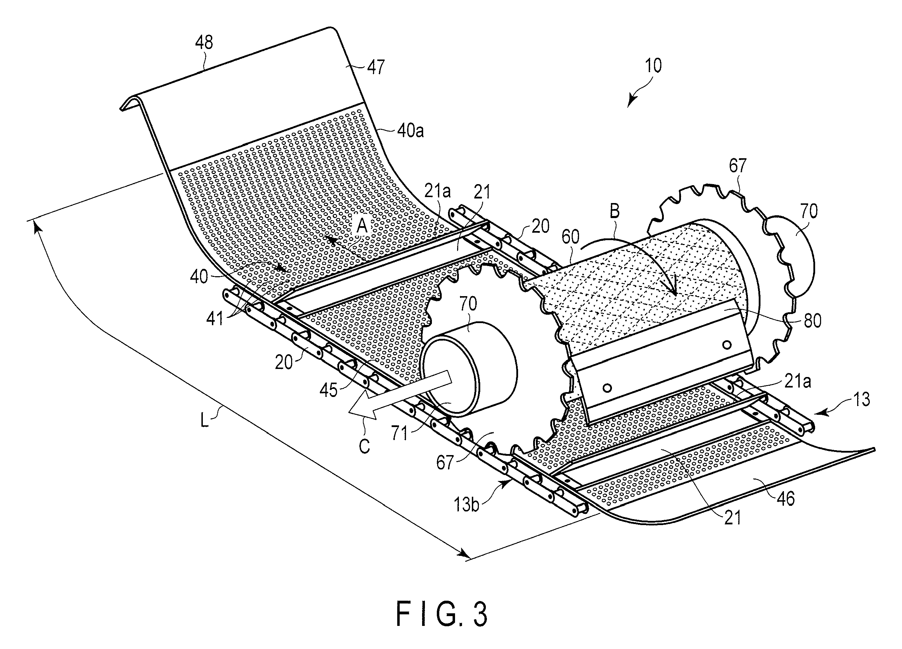

The conveyer 13 is arranged to reach the sludge scraping portion 15 and the sludge discharge portion 16 from a bottom portion 11a of the filter tank 11. This conveyer 13 has a chain 20 (shown in FIG. 2 and FIG. 3) and scrapers 21. The chain 20 is wound around an upper sprocket 22 and a lower sprocket 23 and driven to endlessly travel in a direction indicated by an arrow A shown in FIG. 1 by a drive mechanism 17. The chain 20 is movably supported by guide members 25 and 26 (shown in FIG. 2) provided in the filter tank 11.

As shown in FIG. 1, the conveyer 13 has a lower portion (an outward path portion) 13a and an upper portion (a return path portion) 13b. The lower portion 13a of the conveyer 13 moves toward the sludge discharge portion 16 along the bottom portion 11a of the filter tank 11 and a bottom portion of the sludge scraping portion 15. The upper portion 13b of the conveyer 13 moves above the lower portion 13a in the opposite direction to the lower portion 13a from the upper sprocket 22 toward the lower sprocket 23.

The upper portion 13b of the conveyer 13 includes a falling portion 13c, a traversing portion 13d, a rising portion 13e, and others. The falling portion 13c moves obliquely downward along the sludge scraping portion 15. The traversing portion 13d moves in the substantially horizontal direction along the bottom portion 11a of the filter tank 11. The rising portion 13e moves obliquely upward toward the liquid level Q3. Respective chain guides 31a, 31b, 31c, and 31d are provided at positions where the moving direction of the conveyer 13 varies.

The scrapers 21 are disposed in the longitudinal direction of the chain 20 at predetermined intervals. As shown in FIG. 2, each scraper 21 has a first portion 21a. The first portion 21a moves on the lower portion 13a of the conveyer 13 along the bottom portion 11a of the filter tank 11. Moreover, a second portion 21b which faces the opposite side of the first portion 21a is disposed to this scraper 21. Although the second portions 21b may be provided to all the scrapers 21, they may be provided to some of the scrapers 21 at a predetermined pitch. An example of the second portion 21b is a metallic plate, but a blade made of a material having elasticity such as rubber may be adopted.

The first portion 21a of each scraper 21 carries sludge S such as shavings deposited at the bottom portion 11a of the filter tank 11 to the sludge discharge portion 16 from the bottom portion 11a of the filter tank 11 via the sludge scraping portion 15. The sludge S that has reached the sludge discharge portion 16 falls toward a collection box 35.

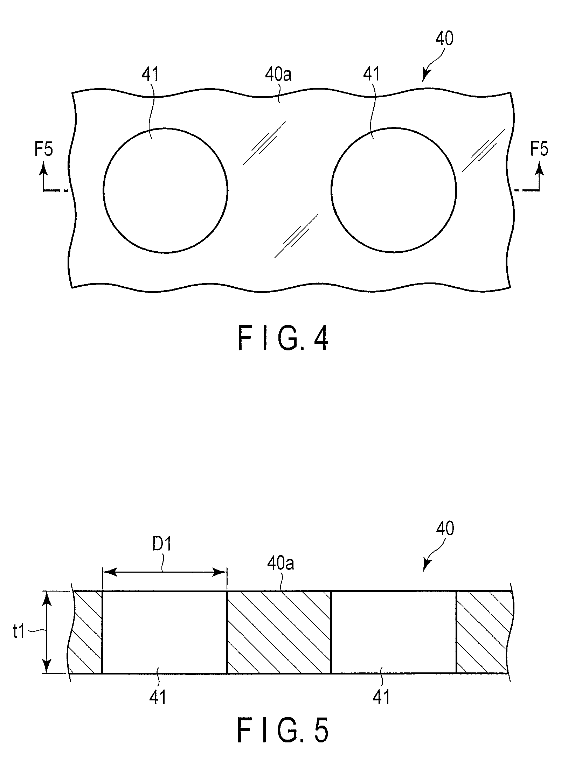

This filtering apparatus 10 has a primary filter 40. The primary filter 40 is constituted by forming many primary circulation holes 41 (which are partially shown in FIG. 4 and FIG. 5) in a panel member 40 made of stainless steel. That is, the primary filter 40 is made of a punching metal. An example of a diameter D1 of each primary circulation hole 41 is φ1 mm, and an example of a thickness of the same is 1 mm.

The primary filter 40 is arranged between the lower portion 13a and the upper portion 13b of the conveyer 13 in the filter tank 11. Further, this primary filter 40 is arranged in the filter tank 11 along the moving direction of the conveyer 13.

As shown in FIG. 1 and FIG. 2, the primary filter 40 has a bottom plate portion 45, a front side plate portion 46, and a rear side plate portion 47. The bottom plate portion 45 is substantially horizontally arranged along the traversing portion 13d of the conveyer 13. As shown in FIG. 2, both side portions of the primary filter 40 are disposed to support portions 11b and 11c provided on side walls of the filter tank 11.

Of the guide members 25 and 26 shown in FIG. 2, the lower guide member 25 supports the lower portion 13a of the conveyer 13. As a result, the second portion 21b of each scraper 21 faces a lower surface of the bottom plate portion 45 of the primary filter 40 to interpose a gap G1 therebetween. The upper guide member 26 supports the upper portion 13b of the conveyer 13. The second portion 21b of each scraper 21 is in contact with an upper surface of the bottom plate portion 45 of the primary filter 40.

The front side plate portion 46 of the primary filter 40 extends in the oblique direction from a front end of the bottom plate portion 45 along the sludge scraping portion 15. Furthermore, this side plate portion 46 is parallel to the falling portion 13c of the conveyer 13. The rear side plate portion 47 extends in the oblique direction from a rear end of the bottom plate portion 45 toward the liquid level Q3. Moreover, this side plate portion 47 extends in the oblique direction along the rising portion 13e of the conveyer 13. A height of an end portion 48 of the panel member 40a that forms the primary filter 40 is equal to a height of the liquid level Q3. It is to be noted that, even if the height of the end portion 48 is higher than or lower than the liquid level Q3, there is no practical issue.

The primary circulation holes 41 formed in the primary filter 40 may be formed in the entire panel member 40a. However, in this embodiment, to reduce a cost, the primary circulation holes 41 are formed in the range of a length L (shown in FIG. 3) including the bottom plate portion 45. FIG. 3 shows part of the primary circulation holes 41 and the chain 20.

The inside of the filter tank 11 is divided into a first filter tank portion 51 and a second filter tank portion 52 by the primary filter 40. The first filter tank portion 51 is formed between the bottom portion 11a of the filter tank 11 and the primary filter 40. The second filter tank portion 52 is formed on the upper side of the primary filter 40 in the filter tank 11. The first filter tank portion 51 and the second filter tank portion 52 communicate with each other through the primary circulation holes 41.

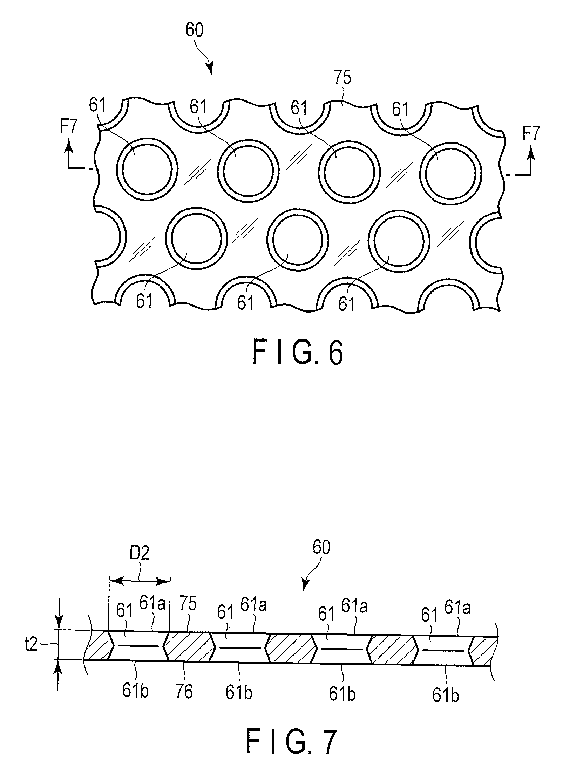

Further, this filtering apparatus 10 has a cylindrical secondary filter (a drum filter) 60. The secondary filter 60 is formed of a thin stainless steel spring plate having a thickness of, e.g., approximately 0.2 mm. Many secondary circulation holes 61 (shown in FIG. 6 and FIG. 7) are formed in this secondary filter 60 by photo-etching. End members 65 are fixed to both end portions of the secondary filter 60 by fixing members 66. Sprockets 67 are provided to these end members 65, respectively. These sprockets 67 mesh with the chain 20 of the upper portion 13b of the conveyer 13 from above.

In the second filter tank portion 52, the secondary filter 60 is arranged above the bottom plate portion 45 of the primary filter 40 and above the upper portion 13b of the conveyer 13. Furthermore, this secondary filter 60 is supported by a cylindrical support member 70 (shown in FIG. 2) provided in the filter tank 11 to be rotatable on an axial line X in the horizontal direction. The entire circumference of the secondary filter 60 is placed below the liquid level Q3. Therefore, the entire secondary filter 60 is submerged in the liquid Q2.

As shown in FIG. 2, a clean liquid circulating portion 71 is formed in the support member 70. The clean liquid circulating portion 71 communicates with a space 60a in the secondary filter 60. That is, the space 60a in the secondary filter 60 communicates with the clean tank 12 through the clean liquid circulating portion 71. The clean liquid C that has flown into the space 60a in the secondary filter 60 can flow into the clean tank 12 via the clean liquid circulating portion 71.

The lower portion of the sprocket 67 of the secondary filter 60 meshes with the chain 20 of the conveyer 13 from above. When the conveyer 13 moves in the direction of the arrow A in FIG. 1, the sprocket 67 is driven to rotate, and the secondary filter 60 thereby rotates in a direction indicated by an arrow B. That is, the chain 20 of the conveyer 13 and the sprocket 67 also function as a mechanism configured to rotate the secondary filter 60 (rotating means).

As shown in FIG. 6, the secondary filter 60 has many secondary circulation holes 61 formed at a predetermined pitch. Although each secondary circulation hole 61 has, e.g., a circular shape, it may have a shape other than the circular shape. As shown in FIG. 7, inflow openings 61a of the secondary circulation holes 61 are opened in an outer peripheral surface 75 of the secondary filter 60. Outflow openings 61b of the secondary circulation holes 61 are opened in an inner peripheral surface 76 of the secondary filter 60. The liquid to be filtered flows from the inflow openings 61a toward the outflow openings 61b.

For example, a diameter D2 (shown in FIG. 7) of each secondary circulation hole 61 is φ0.2 mm, and a thickness t2 of the same is 0.2 mm. That is, a flow path cross-sectional area of each secondary circulation hole 61 is smaller than the flow path cross-sectional area of each primary circulation hole 41. Since the thicknesses t1 and t2 of the primary filter 40 and the secondary filter 60 and the sizes of the primary circulation hole 41 and the secondary circulation hole 61 are selected in accordance with various conditions such as a filtration accuracy, a flow volume, and others as required, they are not restricted to the above numerical values.

FIG. 7 shows a cross section when the secondary filter 60 is cut in the thickness direction. The secondary circulation hole 61 does not have a shape that is straight along the thickness direction, but its intermediate portion in the thickness direction has the smallest diameter. Each secondary circulation hole 61 having such a shape is obtained by etching a stainless steel sheet, which is a material of the secondary filter 60, from both surface sides at the same time. Each secondary circulation hole 61 formed by the etching does not have such a "burr" as that of a punching metal. Moreover, roughness like a shear mark is not generated on the inner surface of the secondary circulation hole 61. Therefore, shavings are hardly caught, and clogging rarely occurs.

As shown in FIG. 1, a blade member 80 that functions as a scraping plate is arranged near the outer peripheral surface of the secondary filter 60. An end of the blade member 80 is in contact with or close to the outer peripheral surface 75 of the secondary filter 60.

A function of the filtering apparatus 10 having the above configuration will now be described.

The liquid Q1 discharged from the machine tool 1 is supplied to the first filter tank portion 51 of the filter tank 11 via the flow path 2. The sludge S (which is schematically shown in FIG. 1) containing shavings and the like deposited at the bottom of the first filter tank portion 51 is conveyed toward the sludge discharge portion 16 by the first portion 21a of the scraper 21 with the movement of the conveyer 13.

At least part of the shavings or the fine particles in the first filter tank portion 51 moves upwards, passes through the primary circulation holes 41 from the lower surface side of the primary filter 40 together with the liquid Q1, and flows into the second filter tank portion 52. When the liquid Q1 passes through the primary circulation holes 41, primary filtration of relatively large shavings is carried out. When the liquid Q1 passes through the primary circulation holes 41, the shavings, the fine particles, and others that float in the first filter tank portion 51 adhere to the lower surface of the primary filter 40 near inlets of the primary circulation holes 41.

When the scraper 21 on the lower portion 13a of the conveyer 13 moves along the bottom portion 11a of the filter tank 11, the sludge S, e.g., the relatively large shavings deposited on the bottom portion 11a moves together with the scraper 21. When part of the sludge S moving together with the scraper 21 comes into contact with the sludge S adhering to the lower surface of the primary filter 40, this sludge S comes off the lower surface of the primary filter 40. Therefore, clogging can be prevented from occurring in the lower surface of the primary filter 40. It is to be noted that the conveyer 13 may be arranged in such a manner that the upper end of the second portion 21b of the scraper 21 comes into contact with the lower surface of the primary filter 40. In this case, the lower surface of the primary filter 40 can be directly cleaned by the second portion 21b.

The liquid Q2 that has flowed into the second filter tank portion 52 through the primary circulation holes 41 flows into the space 60a in the secondary filter 60 via the secondary circulation holes 61 of the secondary filter 60 arranged in the second filter tank portion 52. Shavings, particles, and the like that are too large to pass through the secondary circulation holes 61 adhere to positions near the inflow openings 61a of the secondary circulation holes 61. When the shavings, particles, and the like are deposited on the outer peripheral surface 75 of the secondary filter 60, the flow path cross-sectional area of each secondary circulation hole 61 substantially becomes small. As a result, the filtration effect of the secondary circulation holes 61 can be further improved.

The sludge S adhering to the outer peripheral surface 75 of the secondary filter 60 is removed by the blade member 80 with rotation of the secondary filter 60, and it is dropped onto the primary filter 40. The end of the blade member 80 may be slightly apart from the secondary filter 60. In this case, when the shavings adhering to the outer peripheral surface 75 of the secondary filter 60 come into contact with the end of the blade member 80, the shavings can be dropped from the secondary filter 60.

The fine sludge S dropped onto the primary filter 40 is conveyed toward the end portion 48 of the primary filter 40 by the second portion 21b of the scraper 21 with the movement of the conveyer 13. The sludge S conveyed to the end portion 48 is dropped into the first filter tank portion 51 from the end portion 48. In this manner, the upper surface of the primary filter 40 is cleaned by the second portion 21b of the scraper 21.

The sludge S dropped into the first filter tank portion 51 is deposited in the first filter tank portion 51. The shavings in the liquid Q1 that flows into the first filter tank portion 51 from the flow path 2 are also deposited in the first filter tank portion 51. The sludge S deposited in the first filter tank portion 51 is conveyed toward the sludge discharge portion 16 by the first portion 21a of the scraper 21.

The clean liquid C that has flowed into the secondary filter 60 flows into the clean tank 12 via the clean liquid circulating portion 71. The clean liquid C in the clean tank 12 is pumped up by the pump 3 and supplied to the machine tool 1 via the supply flow path 4. Therefore, the accurately filtered clean coolant (the clean liquid C) can be always supplied to the machine tool 1, and the machine tool 1 can normally function.

As described above, the scraper 21 on the upper portion (the return side portion) 13b of the conveyer 13 according to this embodiment has a function of cleaning the upper surface of the primary filter 40. Further, this scraper 21 also has a function of moving the sludge S dropped onto the primary filter 40 from the secondary filter 60 toward the first filter tank portion 51.

A filtration accuracy of the primary filter 40 is lower than that of the secondary filter 60 so that the secondary filter 60 can sufficiently exert the filtration performance in the relatively clean liquid Q2. That is, the relatively large shavings are filtered by the primary filter 40, and then the finer shavings or particles are filtered by the secondary filter 60. Therefore, the thin and damageable secondary filter 60 can be prevented from being damaged by the large shavings.

Furthermore, according to the filtering apparatus 10 of this embodiment, since such a cleaning liquid jet mechanism as that in the conventional backwashing mesh drum is not required, the configuration is simplified, and consumption of energy is small. Moreover, deformation of the filter due to jet of the cleaning liquid like that in the backwashing mesh drum can be avoided, and durability of the secondary filter 60 can be greatly improved.

The secondary filter 60 according to this embodiment is arranged above the conveyer 13. Therefore, at the time of performing, e.g., a maintenance operation of the secondary filter 60, the chain 20 of the conveyer 13 does not have to be removed. Therefore, an operation that handles the secondary filter 60 can be facilitated. Additionally, a post-processing device required in the conventional highly accurate filtration is no longer necessary. Therefore, the compact filtering apparatus 10 which has a high filtration accuracy and lower consumption of energy can be configured.

### Industrial Applicability

The filtering apparatus according to the present invention can be used for filtering a liquid other than the coolant. It is needless to say that, on the occasion of embodying the present invention, constituent elements of the present invention, e.g., specific structures or arrangement of the filter tank, the conveyer, the primary filter, and the secondary filter that constitute the filtering apparatus can be changed and carried out in many ways. Further, plural secondary filters may be arranged to be parallel to the moving direction of the conveyer.

**Reference Signs List**

| | |
|---|---|
| 10 | filtering apparatus |
| 11 | filter tank |
| 13 | conveyer |
| 21 | scraper |
| 21a | . first portion |
| 21b | . second portion |
| 40 | primary filter |
| 41 | primary circulation hole |
| 51 | first filter tank portion |
| 52 | second filter tank portion |
| 60 | secondary filter |
| 61 | secondary circulation hole |

## Claims

1. A filtering apparatus comprising:
a filter tank (11) which accommodates a liquid (Q1) to be filtered;
a sludge discharge portion (16) which is provided at a position higher than a liquid level (Q3) of the liquid (Q1) in the filter tank (11);
a conveyer (13) which comprises a scraper (21) that moves from a bottom portion (11a) of the filter tank (11) to the sludge discharge portion (16);
a primary filter (40) which is arranged in the filter tank (11) along a moving direction of the conveyer (13) and has a primary circulation hole (41) through which the liquid (Q1) passes;
a first filter tank portion (51) which is formed between the bottom portion (11a) of the filter tank (11) and the primary filter (40);
a second filter tank portion (52) formed on the upper side of the primary filter (40) in the filter tank (11);
a cylindrical secondary filter (60) which is rotatably arranged in the second filter tank portion (52) and has a secondary circulation hole (61) through which the liquid (Q2) passes; and
a mechanism (20, 67) which rotates the secondary filter (60).

2. The apparatus according to claim 1,
wherein the secondary circulation hole (61) is smaller than the primary circulation hole (41).

3. The apparatus according to claim 1,
wherein the scraper (21) of the conveyer (13) comprises: a first portion (21a) which faces the bottom portion (11a) of the filter tank (11) and moves along the bottom portion (11a) on a lower portion (13a) of the conveyer (13); and a second portion (21b) which faces an upper surface of the primary filter (40) and moves along the upper surface on an upper portion (13b) of the conveyer (13).

4. The apparatus according to claim 2,
wherein the scraper (21) of the conveyer (13) comprises: a first portion (21a) which faces the bottom portion (11a) of the filter tank (11) and moves along the bottom portion (11a) on a lower portion (13a) of the conveyer (13); and a second portion (21b) which faces an upper surface of the primary filter (40) and moves along the upper surface on an upper portion (13b) of the conveyer (13).

5. The apparatus according to claim 3,
wherein the filter tank (11) comprises a guide member (25) which guides a chain (20) in the lower portion (13a) of the conveyer (13), and the guide member (25) guides the chain (20) in such a manner that the second portion (21b) of the scraper (21) moves along a lower surface of the primary filter (40).

6. The apparatus according to claim 4,
wherein the filter tank (11) comprises a guide member (25) which guides a chain (20) in the lower portion (13a) of the conveyer (13), and the guide member (25) guides the chain (20) in such a manner that the second portion (21b) of the scraper (21) moves along a lower surface of the primary filter (40).

7. The apparatus according to claim 1,
wherein the mechanism (20, 67) which rotates the secondary filter (60) comprises a sprocket (67) that meshes with the chain (20) in the upper portion (13b) of the conveyer (13) from above, and the secondary filter (60) rotates when the sprocket (67) is driven to rotate with the movement of the conveyer (13).

8. A filtering apparatus comprising:
a filter tank (11) which accommodates a liquid (Q1) to be filtered;
a sludge discharge portion (16) which is provided at a position higher than a liquid level (Q3) of the liquid (Q1) in the filter tank (11);
a conveyer (13) which comprises a scraper (21) that moves from a bottom portion (11a) of the filter tank (11) to the sludge discharge portion (16) and also comprises a lower portion (13a) which moves along a bottom portion (11a) of the filter tank (11) and an upper portion (13b) which moves above the lower portion (13a) in the opposite direction to the lower portion (13a), the scraper (21) comprising a first portion (21a) which protrudes on the lower portion (13a) toward the bottom portion (11a) of the filter tank (11) and a second portion (21b) which faces the opposite side of the first portion (21a);
a primary filter (40) which is arranged between the lower portion (13a) and the upper portion (13b) of the conveyer (13) along a moving direction of the conveyer (13) in the filter tank (11), and comprises: a lower surface which has a primary circulation hole (41) through which the liquid (Q1) passes and is parallel to a moving direction of the scraper (21) on the lower portion (13a) of the conveyer (13); and an upper surface which is parallel to the moving direction of the scraper (21) on the upper portion (13b) of the conveyer (13), the upper surface thereof being cleaned by the second portion (21b) of the scraper (21);
a first filter tank portion (51) which is formed between the bottom portion (11a) of the filter tank (11) and the primary filter (40);
a second filter tank portion (52) which is formed on the upper side of the primary filter (40) in the filter tank (11) and communicates with the first filter tank portion (51) through the primary circulation hole (41) of the primary filter (40), and into which the liquid (Q1) in the first filter tank portion (51) flows through the primary circulation hole (41);
a cylindrical secondary filter (60) which is rotatably arranged in the second filter tank portion (52) and has a secondary circulation hole (61) through which a liquid (Q2) in the second filter tank portion (52) passes; and
a mechanism (20, 67) which rotates the secondary filter (60).

9. The apparatus according to claim 8,
wherein the secondary circulation hole (61) is smaller than the primary circulation hole (41).

10. The apparatus according to claim 8,
wherein the first portion (21a) of the scraper (21) conveys sludge (S) deposited in the first filter tank portion (51) toward the sludge discharge portion (16), and the second portion (21b) of the scraper (21) drops the sludge (S) on the primary filter (40) toward the first filter tank portion (51) from an end portion (48) of the primary filter (40).

11. The apparatus according to claim 9,
wherein the first portion (21a) of the scraper (21) conveys sludge (S) deposited in the first filter tank portion (51) toward the sludge discharge portion (16), and the second portion (21b) of the scraper (21) drops the sludge (S) on the primary filter (40) toward the first filter tank portion (51) from an end portion (48) of the primary filter (40).
